# EUROPÄISCHE PATENTSCHRIFT

(11) **EP 1 584 396 B1**
(45) Veröffentlichungstag und Bekanntmachung des Hinweises auf die Patenterteilung: **15.06.2011**
(21) Anmeldenummer: 05004239.9
(22) Anmeldetag: 26.02.2005
(51) Int. Cl.: B23H 9/04

(54) **Verfahren und Maschine zur Herstellung einer Walze**
Machine and process for producing a roll
Machine et procédé pour la production d'un rouleau

(30) Priorität: 16.03.2004 DE 102004013031
(43) Veröffentlichungstag der Anmeldung: 12.10.2005
(73) Patentinhaber: Waldrich Siegen Werkzeugmaschinen GmbH, 57299 Burbach (DE); Court Holdings Limited, Beamsville, ON LOS 1BO (CA)
(72) Erfinder: Vinke, Peter, 28790 Schwanewede (DE); Neuser, Stefan, 57074 Siegen (DE); Meier, Roland, 59439 Holzwickede (DE)
(74) Vertreter: Grosse, Wolf-Dietrich Rüdiger

(56) Entgegenhaltungen:
- DE-A1- 4 227 315
- GB-A- 1 293 576
- US-A- 3 878 353

## Beschreibung

Die Erfindung betrifft ein Verfahren zur Herstellung einer Walze, bei dem die Oberfläche der Walze mittels eines Elektro-Erodierprozesses in die gewünschte Kontur mit einer im voraus gewählten Rautiefe und einer definierten Spitzenzahl gebracht wird und dem Elektro-Erodierprozess ein Feinbearbeitungsprozess nachgeschaltet wird.

Um die Arbeitsfläche einer Walze mit ihrer genauen Kontur zu versehen, die die Walze im fertigen Zustand aufweisen soll, ist es aus der GB-A-1 293 576 bekannt, einen solchen Elektro-Erodierprozess einzusetzen. Dieser als EDT (Electrical Discharge Texturing) bezeichnete Prozess erlaubt eine hochgenaue Profilierung der Oberfläche der Walze, dem sich nach diesem Stand der Technik eine Bearbeitung mittels einer Schleifscheibe als Feinbearbeitung zur Erzeugung einer polierten Oberfläche anschließt.

Beim EDT-Verfahren kommt es durch Funkenerosion der Oberfläche der Walze zu einem Materialabtrag, mit dem es möglich ist, die Walzenoberfläche mit einer im voraus gewählten gleichmäßigen Rautiefe (Mittenrauwert Rₐ) und einer definierten Spitzenzahl zu versehen. Bei diesem Verfahren wird eine Elektrode auf einen exakt geregelten Spalt zur Oberfläche der Walze gebracht. In dieser Position liefert ein Generator mit hoher Frequenz die Energie in Form von Abtragsimpulsen, die örtlich über die Elektrode verteilt zur Kraterbildung führen. Bei einem Impuls formieren sich die leitfähigen Partikel im Dielektrikum zu einer Dipolbrücke, sobald die Impulsspannung wirkt. Ein Strom beginnt zu fließen, wodurch auf der Walzenoberfläche ein muldenförmiges Volumen Material über seinen Schmelzpunkt erhitzt und dadurch vergrößert wird. In einem Entladekanal bildet sich eine Gasblase. Wird der Erodierimpuls dann abgeschaltet, bricht der Entladekanal zusammen, wodurch das erschmolzene Volumen herausgeschleudert und so abgetragen wird. Es bleibt eine muldenförmige Vertiefung zurück, wodurch insgesamt eine diffuse Struktur bei größter programmierbarer Gleichmäßigkeit und engen Toleranzen entsteht.

Im Walzprozess werden die Walzen als Werkzeuge zur Verformung und Texturierung des Walzguts eingesetzt. Dabei werden die Walzen mit einer Walzkraft beaufschlagt, um eine Verformung des Walzgutes zu erreichen. Unter dieser Belastung in den Walzgerüsten verändert sich das Walzverhalten der Walzen insbesondere auf den ersten Walzmetern. Es hat sich herausgestellt, dass bei diesem ersten Betrieb einer neuen Walze die beim Aufrauen auf den Walzenoberflächen erzeugten zu hoch vorstehenden Spitzen abbrechen, was zu Abrieb und Verunreinigungen an der Walzgutoberfläche führt. Diese Verunreinigungen sind für weitere Verformungs- und Beschichtungsprozesse unerwünscht bzw. schädlich und führen zu einem erheblichen Materialausschuss und Mehraufwand bei der Weiterverarbeitung.

Es ist daher üblich bzw. erforderlich, nach der Elektro-Erosion der Walze einen Prozess nachzuschalten, der für eine weitere Verbesserung der Walzenoberfläche sorgt. Dabei wird die Walze außerhalb der EDT-Texturiermaschine entweder mittels Bürsten und/oder mittels einer chemischen Behandlung (Ätzen) so bearbeitet, dass das "Oberflächengebirge" nachbearbeitet wird. Namentlich werden die Spitzen der Rauheitsstruktur gebrochen. Hierfür wird die Walze in eine zusätzliche Maschine (für das Bürsten) oder in ein chemisches Bad (zum Ätzen) verbracht. Dies stellt einen nicht unerheblichen Arbeitsaufwand und damit entsprechende Fertigungskosten dar. Weiterhin ist es nachteilig, dass bei der Bearbeitung mittels Bürsten keine definierten Bearbeitungsbedingungen vorliegen, was für die Reproduzierbarkeit des Prozesses negativ ist. Ferner stellt der nachgeschaltete Prozess eine Vorgehensweise dar, die kaum automatisierbar ist und somit den gesamten Fertigungsprozess der Walzenherstellung nachteilig beeinflußt.

Der Erfindung liegt daher die Aufgabe zugrunde, ein Verfahren zu schaffen, mit dem der Fertigungsprozess für Walzen vereinfacht werden kann. Insbesondere sollen sich die hergestellten Walzen durch ein optimales Einlaufverhalten auszeichnen, so dass die oben genannten Nachteile vermieden werden.

Diese Aufgabe wird erfindungsgemäß durch ein Verfahren nach Anspruch 1 gelöst.

Mit Vorteil wird von der Oberfläche der Walze durch den Feinbearbeitungsprozess in radiale Richtung der Walze gemessen ein Betrag zwischen 1,0 µm und 20 µm Material abgetragen. Ferner wird bevorzugt der Mittenrauwert der Oberfläche der Walze bei der Durchführung des Feinbearbeitungsprozesses im wesentlichen nicht verändert.

Mit der vorgeschlagenen Lösung werden mehrere Vorteile gleichzeitig erzielt:

Es ist möglich, den dem EDT-Texturieren (Elektro-Funkenerosion) nachgeschalteten Feinbearbeitungsprozess in hohem Maße reproduzierbar an diejenigen Eigenschaften anzupassen, die die Oberfläche der Walze nach dem Feinbearbeitungsprozess aufweisen soll. Beim Nachbearbeiten mittels einer Bandschleifeinrichtung, bei der das Schleifband mit Abrasivmaterial, z.B. mit Korund oder mit Bornitrid, mit einer mittleren Korngröf3e zwischen 0,1 µm und 100 µm versehen ist, können alle wesentlichen Bearbeitungsparameter frei gewählt bzw. CNC-gesteuert werden.

Dies gilt für die Vorschubgeschwindigkeit des zum Einsatz kommenden Schleifbandes, für die gewählte Körnung des Schleifbandes, die Härte der Anpressrolle, mit der das Schleifband an die Walzenoberfläche angedrückt wird, für die Anpresskraft, mit der die Anpressrolle an die Walzenoberfläche gepresst wird, und für die Walzendrehzahl.

Die texturierten Walzen können damit exakt auf das gewünschte Traganteilsniveau kalibriert werden. Es ist eine hohe Prozesssicherheit gewährleistet. Damit wird eine ansatzfreie, gleichmäßige Walzenoberfläche mit einem erhöhten Traganteil und daraus resultierender höherer Verschleißfestigkeit im Walzprozess möglich. Das Ausbrechen vereinzelter, ansonsten über den Mittelwert der Rautiefe herausstehender Spitzen wird dadurch verhindert bzw. auf ein Minimum reduziert.

Der gesamte Prozess für die Bearbeitung der Walzenoberfläche kann vollautomatisiert werden. Die Fertigungskosten können - im Vergleich mit heute üblichen Verfahren - wesentlich gesenkt werden.

Vorteilhaft ist ferner, dass die Grenzstruktur mit den größten Rautiefen erhalten bleibt, so dass der Rauheitswert (Rₐ) unverändert bleibt und nur die unerwünschten, geschwächten oberen Spitzen abgetragen werden. Dadurch erfolgt am zu walzenden Werkstück keine Geometrieveränderung, und unter Produktionsbedingungen wird ein konstantes Walzenoberflächenverhalten erreicht.

Die so bearbeiteten Walzen benötigen im Walzprozess und insbesondere zu dessen Beginn keine Einlaufphase. Es brechen insbesondere keine Mikro-Spitzen auf der Walzenoberfläche ab, was zu weniger Abrieb und Schmutz am Walzgut und zu einer längeren Standzeit der Walze im Prozess führt.

Weitere Merkmale und Einzelheiten der Erfindung ergeben sich aus den Ansprüchen. Es zeigen:
- Fig. 1: die Seitenansicht einer teilweise schematisch skizzierten Bearbeitungsmaschine für die Bearbeitung einer Walze;
- Fig. 2: dieselbe Darstellung wie in Fig. 1 mit Darstellung einer Feinbearbeitungseinheit;
- Fig. 3: eine vergrößerte Darstellung der Feinbearbeitungsmaschine gemäß Fig. 2; und
- Fig. 4: die Ansicht A gemäß Fig. 3.

In den Figuren ist eine Bearbeitungsmaschine 7 dargestellt, mit der eine Walze 1 gefertigt werden kann. Es geht bei der Bearbeitung in der Bearbeitungsmaschine 7 darum, die Oberfläche 2 der Walze 1 präzise mit ihrer Endkontur zu versehen.

Zu diesem Zweck kommt die Walze bereits weitgehend vorbearbeitet und oberflächenbehandelt (gehärtet) in die Bearbeitungsmaschine 7.

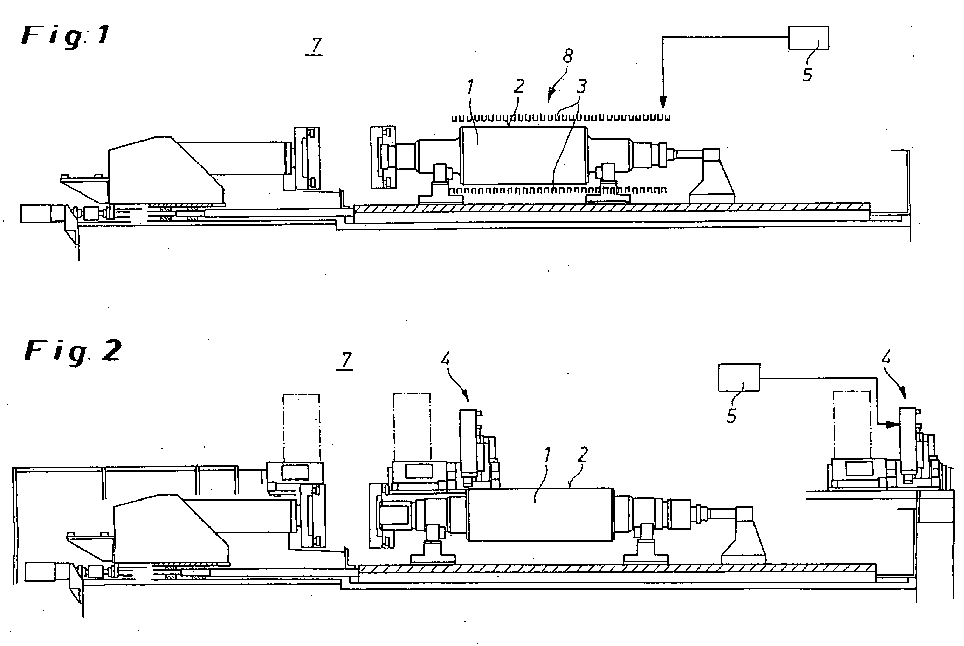

Wie nur sehr schematisch in Fig. 1 zu sehen ist, weist die Bearbeitungsmaschine 7 eine Elektro-Erodiereinheit 3 auf, wobei in Fig. 1 eine Anzahl Elektroden 8 dargestellt ist.

Mittels der Elektroden 8 wird das EDT-Verfahren (Funkenerosionsverfahren) durchgeführt. Dabei erfolgt ein Materialabtrag an der Oberfläche 2 der Walze 1, und zwar in geometrisch vorbestimmter Weise. Hierdurch ist es möglich, die Oberfläche 2 der Walze 1 mit einem gewählten und gleichmäßigen Mittenrauwert Rₐ (Rautiefe) zu versehen und die Anzahl der Materialspitzen festzulegen. Die Elektroden 8 werden dabei auf einen exakt geregelten Spalt zur Oberfläche 2 der Walze 1 gebracht. Das Anlegen eines Impulsstromes hat das Abtragen von Materialpartikeln zur Folge. Zurück bleiben auf der Walzenoberfläche muldenförmige Vertiefungen, wodurch insgesamt eine diffuse Struktur bei einem hohen Maß an Gleichmäßigkeit bei engen Toleranzen erreicht wird.

Die texturierte, d. h. mittels Funkenerosion bearbeitete Oberfläche 2 der Walze 1 wird anschließend mit einer Bandschleifeinrichtung 4 nachgearbeitet, wie sie in Fig. 2 zu sehen ist. Es sei angemerkt, dass aus Gründen der Übersichtlichkeit in Fig. 1 lediglich die Elektro-Erodiereinheit 3 und in Fig. 2 lediglich die Bandschleifeinrichtung 4 eingezeichnet ist; tatsächlich befinden sich beide Einheiten 3, 4 in der Maschine 7.

Allerdings ist aus Fig. 2 ersichtlich, dass die Bandschleifeinrichtung 4 in zwei unterschiedlichen Positionen in der Maschine 7 angeordnet, d. h. dorthin verfahren werden kann: Die rechte Position entspricht einer Ruheposition, in der die Bandschleifeinrichtung 4 nicht arbeitet. In der linken Position ist die Bandschleifeinrichtung 4 an die Walze 1 herangefahren und nimmt von deren Oberfläche 2 Material ab. Hierzu wird die Bandschleifeinrichtung 4 in Achsrichtung der Walze 1 verfahren.

Der mittels der Bandschleifeinrichtung 4 durchgeführte Schleifprozess wird hinsichtlich seiner Betriebsparameter so eingestellt, dass die Oberfläche 2 gemäß vorgegebenen Zieldaten kalibriert wird, d. h. die Oberfläche 2 wird auf ein gewünschtes Traganteilsniveau gebracht.

Anzumerken ist ferner, dass sowohl die Elektro-Erodiereinheit 3 als auch die Bandschleifeinrichtung 4 von einer gemeinsamen CNC-Maschinensteuerung 5 gesteuert werden, die nur sehr schematisch dargestellt ist.

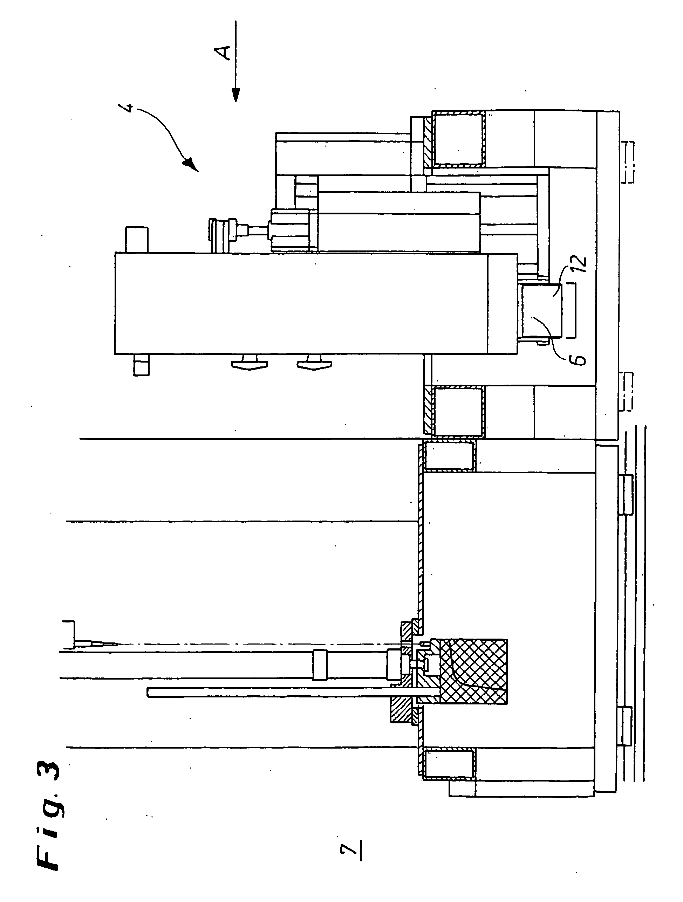

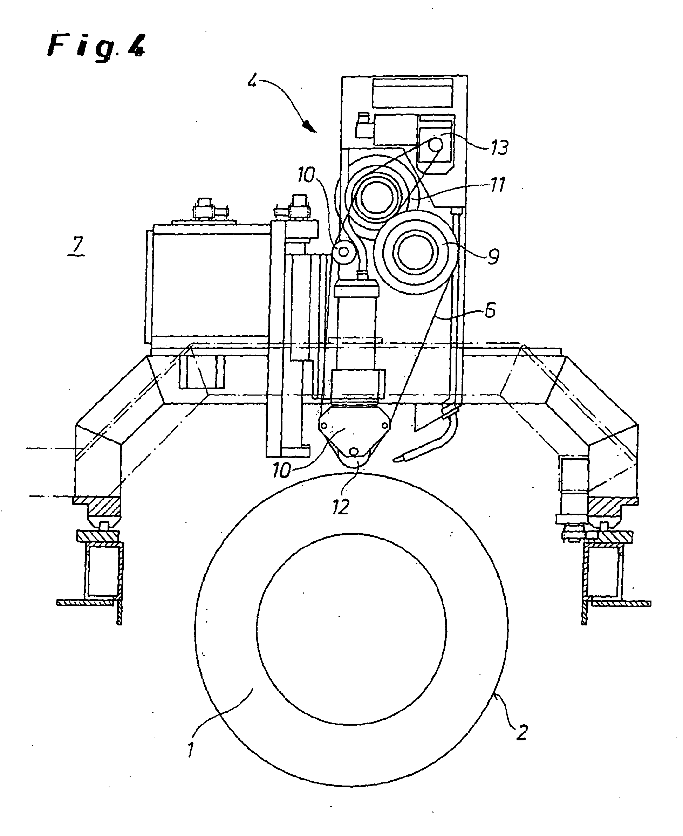

Details der Bandschleifeinrichtung 4 gehen aus den Figuren 3 und 4 hiervor.

Die Bandschleifeinrichtung 4 weist ein Schleifband 6 auf, das auf seiner Oberfläche einseitig mit einem abrasiven Hartstoff, beispielsweise mit Korund oder Bornitrid, versehen ist. Dabei ist die Körnung des Hartstoffs so gewählt, dass die gewünschte Oberflächenkontur auf der Walze 1 entsteht. Sehr feiner Hartstoff kann eine mittlere Korngröße im Bereich von weniger als 1 µm haben, für gröbere Bearbeitungsvorgänge bei entsprechend höherer Abtragrate sind große Körnungen im Bereich bis ca. 50 bis 100 µm denkbar.

Das Schleifband 6 ist auf einer Abwickelrolle 9 aufgewickelt, von der es abgewickelt wird. Eine Bandführung 10 führt das Band 6 in den Bereich der Oberfläche 2 der Walze 1. Von dort wird es weiter zu einer Aufwickelrolle 11 geführt, die das Band 6 wieder aufwickelt. Es kommen dabei Bandlängen von 15 bis 50 m zum Einsatz.

Das Schleifband 6 wird mittels einer Andruckrolle 12 mit einer radial zur Achse der Walze 1 gerichteten Andruckkraft auf die Walzenoberfläche 2 gepresst.

Die Abwickelgeschwindigkeit des Schleifbandes 6 von der Abwickelrolle 9 bzw. auf die Aufwickelrolle 11 wird durch einen steuerbaren Antriebsmotor 13 vorgegeben.

Durch die Wahl der Körnung des abrasiven Hartstoffs des Schleifbandes 6, durch die auf die Andruckrolle 12 ausgeübte Andruckkraft, durch die vom Antriebsmotor 13 vorgegebene Geschwindigkeit des Schleifbandes 6, durch den Axialvorschub der Bandschleifeinrichtung 4 relativ zur Walze 1 sowie durch die Walzendrehzahl sind diverse Parameter des Bearbeitungsprozesses frei wählbar bzw. steuerbar, um ein gewünschtes Arbeitsergebnis zu erzielen.

Das Abwickeln des Schleifbandes 6 erfolgt somit geschwindigkeitsgeregelt durch den Antriebsmotor 13. Der Vorschub des Schleifbandes 6 - in Achsrichtung der Walze 1 - wird vorzugsweise stufenlos geregelt.

Das erläuterte gesteuerte Ab- und Aufwickeln des Schleifbandes 6 von der Rolle 9 bzw. auf die Rolle 11 hat ein kontinuierliches Zuführen von neuem Schleifmittel zur Folge, wodurch ein auf der gesamten Oberfläche 2 der Walze 1 gleichmäßiges und ansatzfreies Oberflächenfinish erreicht wird.

Durch freie Wahl der genannten Parameter, die den Schleifprozess bestimmen, können gewünschte Oberflächenparameter nach dem Texturieren erreicht werden.

Der Mittenrauwert Rₐ ändert sich durch den Superfinish-Prozess in Form des Schleifens nicht bzw. kaum. Ebenfalls bleibt der Pc-Wert konstant.

Wie in den Figuren zu sehen ist, ist die Feinbearbeitungseinheit 4 in die Maschine 7 zur Durchführung der Elektro-Erosion integriert. Allerdings ist es auch möglich, dass die Feinbearbeitungseinheit 4 außerhalb dieser Maschine angeordnet wird, beispielsweise in Kombination mit einer Mess- oder Inspektionsvorrichtung (nicht dargestellt).

Im Falle der Integration der Feinbearbeitungseinheit 4 in die Elektro-Erosions-Maschine 7 kann - wie dargestellt - die Feinbearbeitungseinheit 4 in einem reitstockseitigen Deckel einer Tankabdeckung angeordnet werden, so dass das Schleifband 6 von oben auf die Oberfläche 2 der Walze 1 aufgesetzt werden kann.

Im Falle der Kombination der Feinbearbeitungseinheit 4 mit einem Inspektionsstand oder mit einer Schleif- oder Drehmaschine kann die Feinbearbeitungseinheit 4 so angeordnet werden, dass das Schleifband 6 horizontal an die Oberfläche 2 der Walze 1 herangeführt wird.

### Bezugszeichenliste:

- 1: Walze
- 2: Oberfläche
- 3: Elektro-Erodiereinheit
- 4: Feinbearbeitungseinheit
- 5: CNC-Maschinensteuerung
- 6: Schleifband
- 7: Bearbeitungsmaschine
- 8: Elektroden
- 9: Abwickelrolle
- 10: Bandführung
- 11: Aufwickelrolle
- 12: Andruckrolle
- 13: Antriebsmotor

- Rₐ: Mittenrauwert (Rautiefe)

## Patentansprüche

1. Verfahren zur Herstellung einer Walze (1), bei dem die Oberfläche (2) der Walze (1) mittels eines Elektro-Erodierprozesses in die gewünschte Kontur mit einer im voraus gewählten Rautiefe und einer definierten Spitzenzahl gebracht wird und dem Elektro-Erodierprozess ein Feinbearbeitungsprozess nachgeschaltet wird,
**dadurch gekennzeichnet,**
**dass** der Feinbearbeitungsprozess ein mechanischer Bearbeitungsprozess mit geometrisch unbestimmter Schneide ist und als Bandschleifprozess durchgeführt wird, wobei nur die geschwächten oberen Spitzen der Walzenoberfläche abgetragen werden, so dass dadurch das Ausbrechen vereinzelter, ansonsten über den Mittelwert der Rautiefe heraustehenden Spitzen der Walzenoberfläche, im Walzprozess verhindert bzw. auf ein Minimum reduziert wird.

2. Verfahren nach Anspruch 1,
**dadurch gekennzeichnet,**
**dass** von der Oberfläche (2) der Walze (1) durch den Feinbearbeitungsprozeß in radiale Richtung der Walze (1) gemessen ein Betrag zwischen 1,0 µm und 20 µm Material abgetragen wird.

3. Verfahren nach Anspruch 1 oder 2,
**dadurch gekennzeichnet,**
**dass** der Mittenrauwert (Rₐ) der Oberfläche (2) der Walze (1) bei dem Feinbearbeitungsprozess im wesentlichen unverändert bleibt.

## Claims

1. A method for producing a roller, wherein the surface (2) of the roller (1) is brought into the desired contour with a peak-to-valley height selected in advance and a defined peak number by means of an electric-discharge process and a precision machining process is connected downstream of the electric-discharge process, **characterized in that** the precision machining process is a mechanical machining process with geometrically undefined cutting edge and is carried out as band grinding process, wherein only the weakened upper peaks of the roller surface are removed so that the breaking-out of individual peaks otherwise protruding over the mean value of the peak-to-valley height of the roller surface in the rolling process is prevented or reduced to a minimum.

2. The method according to Claim 1, **characterized in that** from the surface (2) of the roller (1) through the precision machining process measured in radial direction of the roller (1) an amount between 1.0µm and 20µm of material is removed.

3. The method according to Claim 1 or 2, **characterized in that** the mean roughness value (ra) of the surface (2) of the roller (1) remains substantially unchanged during the precision machining process.

## Revendications

1. Procédé pour fabriquer un rouleau (1), dans lequel la surface (2) du rouleau (1) est amenée au moyen d'un processus d'électroérosion dans le contour souhaité avec une rugosité choisie à l'avance et un nombre de pointes défini et un processus d'usinage fin est placé en aval du processus d'électroérosion,
**caractérisé en ce que**
le processus d'usinage fin est un processus d'usinage mécanique avec une lame non définie au plan géométrique et est réalisé comme processus de ponçage à bande abrasive, seules les pointes supérieures affaiblies de la surface de rouleau étant enlevées, de sorte qu'ainsi la rupture de pointes isolées, dépassant par ailleurs de la valeur moyenne de rugosité, de la surface de rouleau est ainsi empêchée dans le processus de laminage et est réduite à un minimum.

2. Procédé selon la revendication 1,
**caractérisé en ce**
**qu'**une valeur comprise entre 1,0 µm et 20 µm de matériau, mesurée dans le sens radial du rouleau (1), est enlevée de la surface (2) du rouleau (1) par le processus d'usinage fin.

3. Procédé selon la revendication 1 ou 2,
**caractérisé en ce que**
la rugosité moyenne (Rₐ) de la surface (2) du rouleau (1) reste sensiblement inchangée lors du processus d'usinage fin.
